# FASCICULE DE BREVET EUROPEEN

(11) **EP 3 840 930 B1**
(45) Date de publication et mention de la délivrance du brevet: **17.05.2023**
(21) Numéro de dépôt: 19783094.6
(22) Date de dépôt: 22.08.2019
(51) Int. Cl.: B29C 51/14, B29L 31/30, B29C 51/00, B29K 105/08, B29K 105/12, B29L 31/00, B32B 38/12, B32B 38/18, E04B 1/80, F16L 59/065, B60R 13/08

(54) **ÉLÉMENT THERMOFORMÉ 3D**
3D-THERMOGEFORMTES ELEMENT
3D THERMOFORMED ELEMENT

(30) Priorité: 22.08.2018 FR 1857600
(43) Date de publication de la demande: 30.06.2021
(73) Titulaire: HUTCHINSON, 75008 Paris (FR)
(72) Inventeur: CHOPARD, Fabrice, 38400 SAINT MARTIN D'HERES (FR); HUILLET, Cédric, 45200 Montargis (FR)
(74) Mandataire: Ernest Gutmann - Yves Plasseraud S.A.S.
(86) Numéro de dépôt international: PCT/FR2019/051949
(87) Numéro de publication internationale: WO 2020/039148

(56) Documents cités:
- WO-A1-2017/029462
- WO-A1-2017/153691
- WO-A1-2017/153693
- DE-A1-102011 116 457
- DE-U1-212014 000 217
- JP-A- H07 187 008
- JP-A- 2000 097 390
- JP-A- 2007 283 989
- JP-A- 2008 202 709

## Description

La présente invention concerne un élément thermoformé en trois dimensions.

De nombreux éléments de doublure, typiquement de doublure intérieure, comme dans un véhicule, tel un aéronef, un train, un navire ou une automobile, sont déjà utilisés à des fins de protection, typiquement de protection thermique et/ou acoustique, ou encore comme élément de barrière anti-feu.

Pour ce type d'éléments, qui sont typiquement moulés, des problèmes existent toutefois encore tant en termes de réalisation structurelle que de conditions d'utilisation. Ainsi, et par exemple, il existe des éléments comprenant des composés sous forme poudreuse et/ou poreuse, ce qui pose des problèmes de dispersion et/ou de manipulation. Des problèmes structuraux peuvent aussi se poser, dans le cadre par exemple de compromis à atteindre entre des exigences d'une part de protection (par exemple thermique et/ou acoustique et/ou de barrière anti-feu comme précité) et d'autre part de volume et/ou de poids, notamment dans le cas de montage dans des endroits exigus et/ou difficiles d'accès. Des exigences de formes particulières peuvent aussi être établies.

Par exemple dans une automobile, le sol et les parois reliant l'habitacle à l'espace du coffre et le compartiment des passagers à l'espace du moteur sont doublés de pièces moulées isolantes. Ces pièces moulées doivent être adaptées à des pièces de châssis parfois complexes, irrégulières en tenue mécanique et/ou capacité de protection.

Certaines pièces moulées tridimensionnelles, par exemple pour l'isolation acoustique, peuvent être produites à partir de mousse PU (polyuréthane). Cependant, ceci est relativement coûteux. En outre, la mousse PU est également difficile à recycler. Les pièces moulées fabriquées à partir de tapis de fibres classiques, qui sont fabriquées à partir de matériaux fibreux par des rouleaux, ne conviennent qu'à un degré limité.

Les tapis de fibres ne peuvent être utilisés que pour des pièces faiblement déformées. En outre, en raison de la méthode de laminage, ils ne présentent pas une distribution de densité uniforme. Par conséquent, ils ne correspondent souvent pas aux exigences géométriques et acoustiques imposées sur ces pièces moulées spéciales.

WO2017029462A1 divulgue certes déjà un assemblage comprenant :
- un élément structurel interposé entre un environnement extérieur et un volume intérieur à protéger,
- et un élément intérieur de doublure de l'élément structurel, l'élément intérieur de doublure comprenant au moins un élément isolant thermique, sous vide, qui comprend :
- une structure poreuse comprimée, définissant une première structure poreuse comprenant un matériau poreux ayant une première densité,
- une première enveloppe fermée de façon étanche à l'air :
   -- comprenant une paroi barrière thermoformable et étanche à l'air,
   -- dans laquelle première enveloppe est enfermée la première structure poreuse dont la forme est suivie par la paroi barrière, et
   -- dans laquelle première enveloppe règne, à température et pression extérieures ambiantes, une pression comprise entre moins de 10⁵Pa et plus de 10⁻²Pa, l'élément intérieur de doublure comprenant en outre une deuxième structure poreuse comprenant le même matériau poreux, ou un matériau poreux différent, ayant une deuxième densité, la deuxième densité étant inférieure à la première densité, les première et deuxième structures poreuses étant superposées.

Mais WO2017029462A1 ne traite pas du problème de la protection thermique et acoustique dudit « volume intérieur », ceci dans le cadre d'une solution industrielle et nécessitant une facilité de manipulation, avec un environnement opérationnel qui impose de pouvoir épouser des formes pouvant être complexes.

C'est dans ce cadre, et afin d'apporter une solution adaptable à différents environnements exigeants, où le volume intérieur précité sera protégé thermiquement et acoustiquement,qu'il est ici proposé que ledit assemblage soit en outre tel que :
- le matériau poreux de la première structure poreuse présente une densité comprise entre plus de 100kg/m3 et 800kg/m3, et le matériau poreux de la seconde structure poreuse présente une densité comprise entre 5kg/m3 et moins de 100kg/m3,
- la deuxième structure poreuse présente une épaisseur supérieure à l'épaisseur de la première structure poreuse,
- l'élément structurel et ledit élément isolant thermique sont en trois dimensions, présentant ainsi une forme cintrée et/ou des reliefs et/ou des creux,
- la première structure poreuse, en trois dimensions, présente une forme cintrée et/ou des reliefs et/ou des creux,
- la forme cintrée et/ou les reliefs et/ou les creux dudit élément isolant thermique est/sont engagé(s) au moins en partie avec la forme cintrée et/ou les reliefs et/ou les creux de l'élément structurel, pour sensiblement en épouser une partie au moins du contour,
- la deuxième structure poreuse présente une forme cintrée et/ou des reliefs et/ou des creux, et
- l'élément isolant thermique (1) et la deuxième structure poreuse :
   -- sont enfermés ensemble dans une deuxième enveloppe qui n'est pas sous vide,
   -- et sont interposés entre deux surfaces majeures de la paroi de la deuxième enveloppe, laquelle est thermoformée à l'endroit desdites deux surfaces majeures

Ainsi, on couplera utilement isolation thermique et isolation acoustique.

L'expression « élément intérieur de doublure » (que l'on aurait aussi pu dénommer « élément intérieur de doublure ») a pour sens :
- élément situé radialement à intérieur de l'élément structurel, et le doublant, ou,
- élément situé à l'intérieur d'un volume, ou d'un creux, de l'élément structurel, tout en doublant cet élément.

De fait, et de façon conventionnelle, la structure poreuse sera interposée entre deux surfaces majeures de ladite paroi barrière.

« Surface majeure » est à comprendre en liaison avec « surface mineure (ou marginale) », laquelle est la zone où il y a inter-liaison des feuilles (ou portions de feuille) formant la paroi barrière et où celles-ci sont scellées entre elles pour fermer l'enveloppe. De façon complémentaire, les deux « surfaces majeures » forment ensemble la zone (la plus grande : majeure) de l'enveloppe délimitée par cette zone de scellement et qui forme la partie active (thermiquement isolante) de l'enveloppe.

« Poreux » (poreuse) désigne un matériau (ou une structure) possédant des interstices permettant le passage de l'air. Les matériaux poreux, à cellules ouvertes, incluent donc les mousses mais également les matériaux fibreux (tels que la laine de verre ou de roche). Les interstices de passage que l'on peut qualifier de pores ont des tailles inférieures à 1 ou 2mm de façon à pouvoir garantir une bonne isolation thermique, et de préférence inférieures à 10 micron.

La structure poreuse pourra comprendre ou être constituée de fibres polymères, minérales ou naturelles. Le terme fibres est à comprendre de façon conventionnelle. Il s'agit d'éléments allongés présentant une longueur L (qui correspond à sa plus grande dimension) et, transversalement à cette longueur, une section suivant laquelle la fibre présente une dimension principale d (telle qu'une largeur ou un diamètre), avec un rapport tel que L≥5d, et de préférence L≥10d.

La structure poreuse pourra être de nature textile, ce qui apporterait un effet structurant, avec pour résultat un élément assez léger et de formes pouvant être très variées.

La paroi barrière thermoformable pourra s'apparenter à un film, d'épaisseur comprise entre 50 et 200 microns. Mais elle pourrait être plus épaisse.

Conformément à la définition conventionnelle, l'enveloppe sera alors un objet souple dont (comme sa matière : le film) la forme et celle de la structure poreuse qu'elle entoure s'adapteront l'une à l'autre. Un synonyme en serait alors : sachet ou poche

Bien sûr, l'enveloppe entoure la structure poreuse en la recouvrant complètement.

Il est par ailleurs proposé :
- que l'élément structurel et ledit au moins un dit élément isolant thermique soient (puissent être) en trois dimensions (3D), présentant ainsi une forme cintrée et/ou des reliefs et/ou des creux,
- que la structure poreuse, en trois dimensions, présente (puisse présenter) une forme cintrée et/ou des reliefs et/ou des creux, et
- qu'alors la forme cintrée et/ou les reliefs et/ou les creux d'au moins un dit élément isolant thermique soient engagé(s) au moins en partie avec la forme cintrée et/ou les reliefs et/ou les creux de l'élément structurel, pour sensiblement en épouser une partie au moins du contour.

Si tel est le cas, la paroi barrière thermoformée aura un double effet : celui d'augmentation de la protection thermique dudit élément, du fait de la dépression créée dans l'enveloppe, et celui de maintien mécanique de la forme 3D.

Il est aussi proposé qu'on trouve dans l'enveloppe, avec une structure poreuse en trois dimensions, comme ledit au moins un dit élément isolant thermique :
- localement, une ou des zone(s) d'échange thermique avec un fluide frigorigène ou caloporteur,
- et/ou une ou des zones privilégiées où un échange thermique à maitriser entre l'environnement extérieur et ledit volume intérieur a été identifié,
- et/ou une ou des zone(s) de moindre épaisseur (e1) située(s) à l'écart de la ou des zone(s) où l'enveloppe est fermée de façon étanche à l'air,
- et/ou une charge locale d'un matériau à changement de phase (MCP),
- et/ou une charge locale d'un isolant thermique, là où se trouve la ou lesdites zone(s) privilégiées d'échange thermique,
- et/ou une surdensité en matériau poreux par rapport à d'autres zones en matériau poreux, là où se trouve la ou les zone(s) de fixation et/ou là où se trouve la ou lesdites zones privilégiées, et/ou là où se trouve la ou lesdites zone(s) de moindre épaisseur (e1).

Ainsi, on s'adaptera aux configurations locales en y associant une forme 3D.

Pour maintenir sa forme, une fois déformée, la structure poreuse tridimensionnelle (donc non plane) peut ou non contenir un liant (sous-entendu chimique).

La combinaison en particulier entre un film comme précité et la structure poreuse permettra tant d'atteindre que de maintenir dans le temps une forme 3D à la fois légère, à caractéristique thermique et/ou acoustique intéressante, voire mécaniquement solide, en fonction de la ou des densités de structure poreuse retenue.

Notamment avec une paroi barrière thermoformable comme un film, il est conseillé que la paroi thermoformé présente une résistance à la rupture supérieure à 1MPa, et de préférence comprise entre 10MPa et 300MPa.

Ainsi, notamment en l'absence de liant, la paroi pourra imposer à la structure poreuse la forme 3D attendue, en la contraignant à se déformer par rapport à sa forme initiale brute, typiquement une forme 2D.

Notamment avec une structure poreuse comprenant des ou constituée de fibres, et pour compléter le compromis légèreté / structuration / facilité de fabrication / fonctionnalisation(s) possible(s) au sein de l'enveloppe, il est toutefois aussi proposé que la structure poreuse puisse comprendre un liant, de façon que, dans le cas de fibres, soit formée une matrice où lesdites fibres seront liées ainsi entre elles à leurs zones de contact ou de croisement. Mais ceci n'est donc pas obligatoire. Les deux hypothèses sont traitées plus en détail ci-après.

S'il est présent, et dans le même but que ci-avant, le liant comprendra de préférence une colle et / ou un adhésif.

En outre, un tel élément se prêtera facilement à des applications fonctionnelles ciblées, notamment du fait de la structuration apportée par la structure poreuse.

Aussi est-il proposé que ledit élément thermoformé puisse comprendre en outre, dans l'enveloppe, un isolant thermique, de sorte qu'à température et pression ambiantes, l'élément thermoformé présente, à travers la paroi barrière, un coefficient de conductivité thermique (λ) inférieur à 30mW/m.K.

Dans la demande, température et pression ambiantes ont pour sens respectivement 20°C et 10⁵ Pa, à 10% près.

Il pourra être pertinent que, dans l'enveloppe, soit prévu (au moins) un matériau à changement de phase (MCP ; PCM en anglais).

L'utilisation combinée d'une structure poreuse et de particules dispersées pour le(s) MCP(s) et/ou l'isolant thermique permettra d'obtenir, de façon industriellement réalisable en série, une concentration variable de ces composants que le liant fixera et unira.

Avec une réalisation de structure poreuse comme ci-avant, et qu'il y ait ou non de l'isolant thermique et/ou du MCP, ledit élément présentera favorablement, à 5% près, une épaisseur entre 0.8 et 20mm, et une densité entre 5 et 350Kg/ m³.

De préférence, le volume poreux (espace vide) sera compris entre 80 et 99% (en volume).

Avec ou sans liant, un autre aspect prévoit que l'invention permet d'adapter ledit élément à son environnement opérationnel, et en particulier d'obtenir :
- que la structure poreuse soit interposée entre deux surfaces majeures (S1,S2 ci-après) de ladite paroi barrière,
- que la paroi barrière soit thermoformée à l'endroit desdites deux surfaces majeures,
- que ledit élément thermoformé présente des premières zones avec une première épaisseur et des deuxièmes zones avec une deuxième épaisseur inférieure à la première épaisseur,
- et que les deuxièmes zones présentant une densité en matériau poreux supérieure à la densité en en matériau poreux des premières zones.

Ainsi, on pourra aisément faire varier la conductivité thermique et/ou la résistance mécanique dans le sens de l'épaisseur, certes dans une mesure limitée, mais sans avoir nécessairement à ajouter de charges dans la structure textile (MCP ou matière isolante thermique comme un aérogel ; voir ci-après)

En particulier, par exemple pour gérer thermiquement un pack de batteries (electric accumulators en anglais) de véhicule, il est aussi proposé:
- que l'élément structurel soit une partie de la caisse du véhicule ou un plateau de protection rapporté,
- que l'élément intérieur de doublure soit ainsi interposé entre l'environnement extérieur et une plaque de refroidissement d'un pack de batteries d'alimentation électrique du véhicule disposées dans le volume intérieur, lequel véhicule est de type hybride ou tout électrique, ledit au moins un élément isolant thermique étant pris en sandwich entre la plaque de protection et la plaque de refroidissement, laquelle comprend des canaux de circulation d'un fluide de refroidissement disposés en échange thermique avec le pack de batteries.

Et, pour assurer un compromis performant entre ladite gestion thermique par exemple de ce pack de batteries et les contraintes mécaniques (protection et résistance) et d'espace disponible, il est encore proposé:
- que la plaque de refroidissement présente des reliefs et des creux, dont certains au moins sont définis par les canaux de circulation du fluide de refroidissement,
- que l'élément structurel présente desdits reliefs et desdits creux,
- que ledit élément isolant thermique présente aussi desdits reliefs et desdits creux,
- que lesdits reliefs respectifs de l'élément isolant thermique soient alors engagés avec les creux respectifs de la plaque de refroidissement et de l'élément structurel, et
- que les creux respectifs de cet élément isolant thermique soient engagés avec les reliefs respectifs de la plaque de refroidissement et de l'élément structurel.

Dans une autre application, il est proposé que, dans l'assemblage :
- l'élément structurel puisse être un panneau de porte, métallique, composite ou plastique, qui définit un cadre structurel d'une portière d'automobile, et
- que l'assemblage comprenne alors en outre :
   -- d'un côté extérieur de l'élément structurel, une tôle de portière définissant un habillage extérieur de la porte et qui est fixée à l'élément structurel, et,
   -- d'un côté intérieur de l'élément structurel, un habillage intérieur fixé à l'élément structurel, de sorte que l'élément intérieur de doublure comprenant ledit élément isolant thermique soit interposé entre la tôle de portière et l'habillage intérieur.

Ainsi, on améliorera l'isolation, sans pénaliser ni le poids ni l'encombrement.

Autre application pertinente, avec des avantages comparables, celle dans laquelle :
- l'élément structurel comprendrait une partie de caisse d'un véhicule automobile entourant un habitacle du véhicule, et
- l'assemblage comprendrait en outre, depuis l'élément structurel vers ledit au moins un élément isolant thermique, une couche d'air puis une autre partie d'élément structurel.

Autre application pertinente, encore avec des avantages comparables, celle dans laquelle :
- l'élément structurel comprendrait une partie de fuselage d'aéronef entourant un compartiment passager, et
- l'assemblage comprendrait en outre, entre l'élément structurel et ledit au moins un élément isolant thermique, une couche d'air d'épaisseur au moins égale à 20mm.

Autre application pertinente, encore avec des avantages comparables, celle dans laquelle l'élément structurel comprendrait :
- des panneaux extérieurs appartenant à une partie de fuselage d'aéronef et, fixés à eux intérieurement,
- des cadres et/ou des lisses et/ou des longerons, lesquels seraient individuellement entourés par au moins un dit élément isolant thermique et par ladite deuxième structure poreuse.

Pour favoriser manutention, stockage et sécurité, il est aussi proposé que l'élément isolant thermique et la deuxième structure poreuse soient enfermés ensemble dans une deuxième enveloppe qui sera typiquement un film (épaisseur inférieure à 1/10mm) et qui pourra être une paroi anti-feu (répondant aux spécifications suivantes : UL94 V0 et/ou FAR 25.856 ; avec alors une sécurité encore améliorée).

Pour la compacité et les performances mécaniques/énergétiques, la deuxième structure poreuse pourra présenter une forme cintrée et/ou des reliefs et/ou des creux.

L'élément isolant thermique et la deuxième structure poreuse seront typiquement interposés entre deux dites surfaces majeures de ladite paroi, laquelle sera alors thermoformée à l'endroit de cesdites deux surfaces majeures.

L'invention sera si nécessaire mieux comprise et d'autres détails, caractéristiques et avantages de l'invention pourront apparaître à la lecture de la description suivante faite à titre d'exemple non limitatif en référence aux dessins annexés dans lesquels :
- la figure 1 est une vue en coupe d'un tronçon de pièce correspondant à l'élément précité selon l'invention, cette vue étant complétée par un agrandissement local ;
- la figure 2 correspond à l'agrandissement local de la figure 1, avec toutefois ajout d'isolant thermique dans la structure poreuse ;
- la figure 3 correspond au tronçon coupé de la figure 1, avec cette fois ajout de particules de MCP dans la structure poreuse ;
- la figure 4 est aussi une coupe planaire d'une pièce correspondant à l'élément précité selon l'invention, avec une sur-densification en structure poreuse en périphérie, de même pour les coupes des figures 5 et 6 où l'élément illustré, selon l'invention, est toutefois soit pourvu de sur-densifications locales en particules d'isolant thermique (figure 5) et en MCP (figure 6), respectivement, la coupe identique de la figure 7 correspondant à une structure poreuse sans liant,
- la figure 8 schématise un exemple de structure poreuse brut, dans une hypothèse sans liant, comme on l'utilise quand on vient la placer dans le moule de mise en forme,
- la figure 9 schématise une application à une portière d'automobile, et,
- la figure 10 schématise en éclaté une solution d'isolation de batteries, avec imbrication de formes, donc gain thermique et de place,
- les figures 11, puis 12,13 schématisent deux moules de fabrication d'un ensemble thermoformé en trois dimensions, et la figure 14 schématise un assemblage (en coupe) à capacités thermique et acoustique renforcées, à double poche, l'une dans l'autre, et double épaisseur d'isolants,
- les figures 15-17 schématisent une variante d'application ; la figure 17 illustre la coupe XVII-XVII dans la zone cerclée de la figure 16, avec un agrandissement local à l'endroit fléché ;
- les figures 18-19 schématisent une autre variante d'application ; la figure 19 illustre en coupe, comme la figure 17, la zone XIX cerclée de la figure 18, laquelle montre une zone de fuselage à différentes profondeurs pour mieux rendre visibles les couches qui compose le fuselage ; et
- la figure 20 illustre schématisent en coupe encore une autre variante d'application.

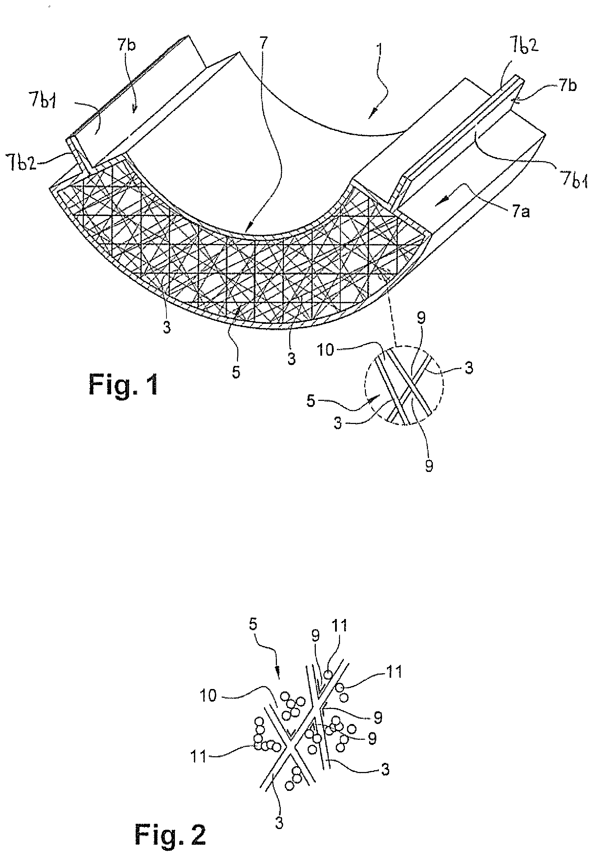

On a donc représenté, en figure 1, un ensemble 1 thermoformé en trois dimensions, de type PIV (panneau isolant sous vide).

Cet ensemble comprend :
- une structure poreuse 5 en trois dimensions, et
- une enveloppe 7 extérieure comprenant (ou constituée par) une paroi 7a.

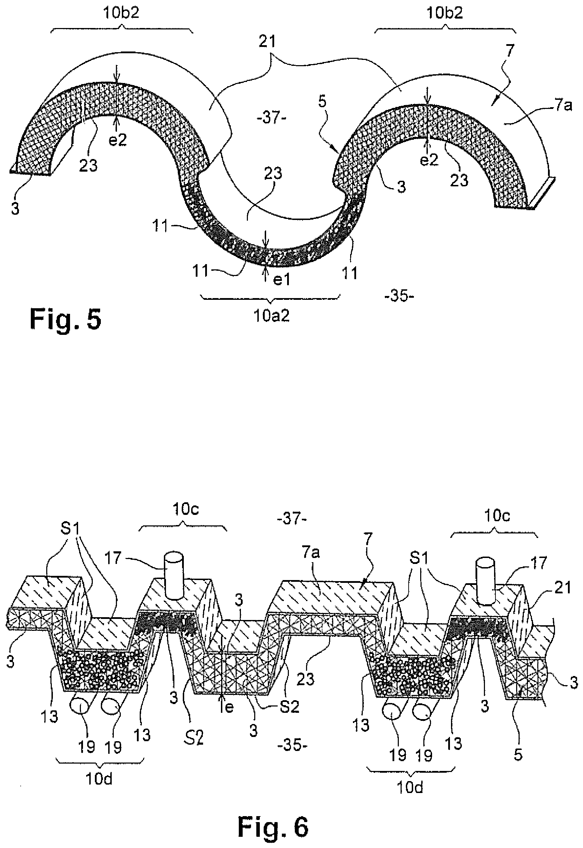

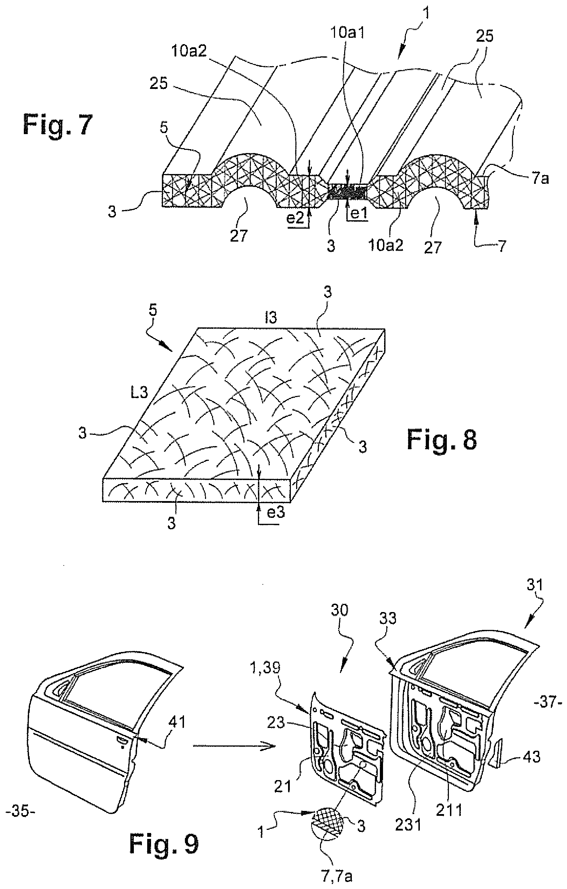

On aura compris que l'expression « en trois dimensions » (3D) équivaut, comme dans le sens commun, à non (intégralement) plan. L'ensemble 1 thermoformé, comme donc la structure textile fibreuse 5, est représenté cintré ; mais ils pourraient aussi présenter des reliefs et/ou des creux locaux communs, comme par exemple en zones respectivement 25, 27 sur la figure 7, ou en figures 5,6 (zones 21 ,23). En anglais, ces creux et reliefs (ou bosses) peuvent être des « embossements ».

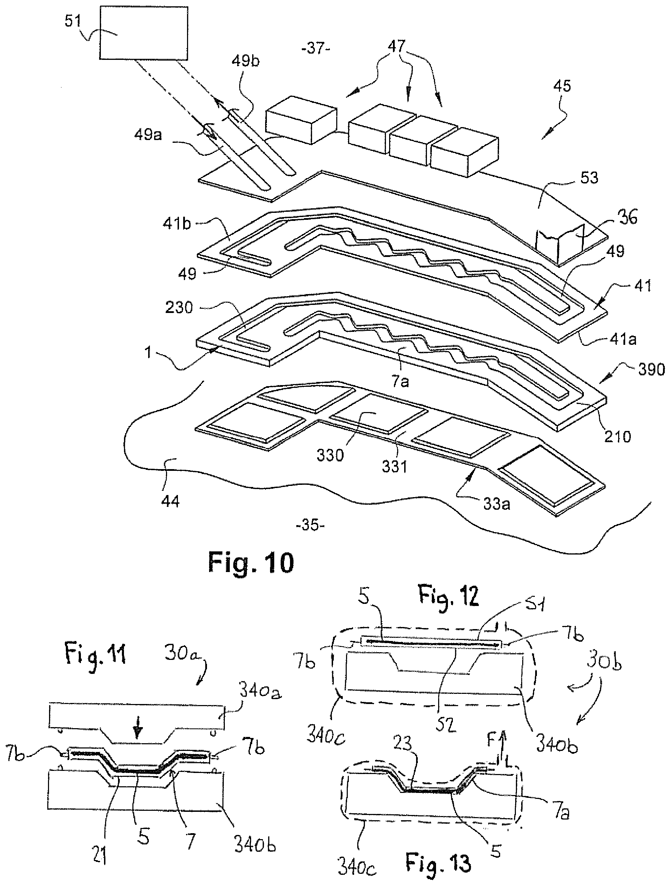

La structure poreuse 5 sera avantageusement à base de poudre ou une structure textile fibreuse et ainsi comprendra des fibres 3 polymères, minérales (verre, basalt par exemple) ou naturelles (cellulose, lin, chanvre par exemple). La structure textile fibreuse 5 sera alors un tissé ou un non-tissé. Un feutre sera intéressant pour sa compression intrinsèque (on désigne par feutre une structure comprimée, non tissée, obtenue en pressant et en agglutinant des fibres). Outre cette compression intrinsèque, le feutre serait avantageusement ultérieurement comprimé dans le moule (30a ou 30b ci-après ; figures 11-13) de mise en forme. Un aérogel est aussi possible, mais si une compression de la structure poreuse ne joue pas en sa faveur. On évitera d'ailleurs d'utiliser une mousse qui perd de sa qualité d'isolant thermique à partir d'un certain degré de compression.

Le feutre, ou plus généralement la structure textile fibreuse 5, peut se présenter comme une plaque (voir figure 8 : e << I < L) ou un bloc (e < I < L). La forme sera typiquement 2D (plane). Un liant chimique n'est pas requis (solution de la figure 8).

La paroi 7a est thermoformable, dans le sens où elle comprend alors un film polymère qui a été thermoformé : polymère seul ou doublé métal, tel un film complexe ou composite : film en PET métallisé où du PET a été vaporisé par de l'aluminium.

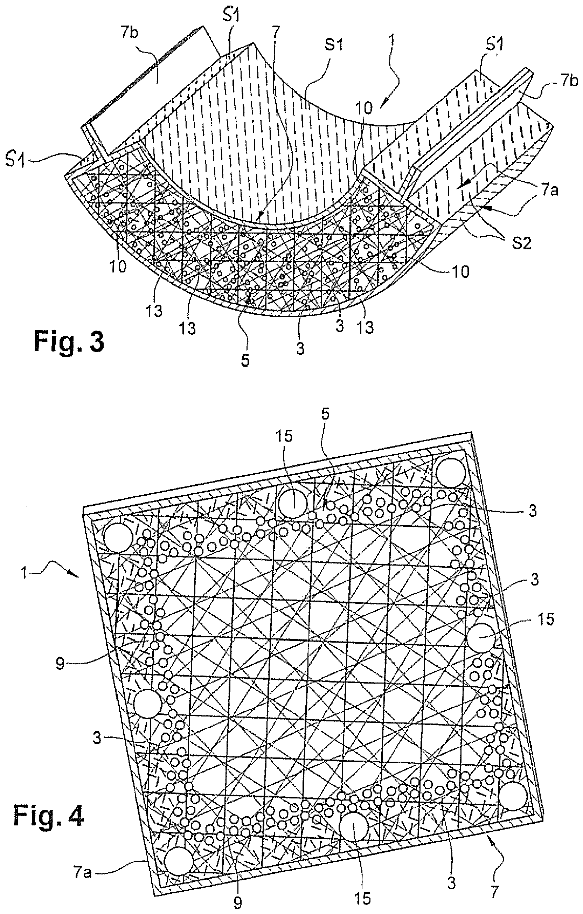

Le film polymère (seul ou donc doublé métal) 7a aura été thermoformé à l'endroit des deux surfaces majeures (ou principales), S1 et S2 figure 3 ou 6 (surfaces opposées l'une à l'autre, en traits tiretés), entre lesquelles la structure textile fibreuse 5, qui est en trois dimensions, présente une forme cintrée et/ou des reliefs 21 et/ou des creux 23. Ce thermoformage du film polymère 7a n'aura donc pas été limité, comme dans une pièce plane 2D, à la zone périphérique mineure/marginale en terme de surface (zones 7b figures 1,3 puisqu'il s'agit de coupes) où il y a inter-liaison des feuilles formant la paroi 7a et où ces feuilles sont scellées entre elles, typiquement thermosoudées, pour fermer l'enveloppe.

L'enveloppe 7 contient de façon fermée la structure poreuse 5 ; et sa paroi 7a suit la forme de cette structure poreuse, là, où elle lui fait face (surfaces majeures S1 et S2).

Comme schématisé figure 8, la structure poreuse 5 se présentera favorablement comme au moins une plaque se différenciant d'un bloc en ce qu'il existe alors un rapport d'au moins cinq entre l'épaisseur e3 et les longueur (L3) et largeur (l3).

Comme mentionné ci-avant, le scellement sur lui-même de la paroi7a aura pu consister en un collage ou un soudage. Ceci confirme que, dans l'ensemble 1 formé en trois dimensions, la structure poreuse 5 et l'enveloppe 7 conservent, comme initialement, leurs identités structurelles respectives. Elles ne sont pas fusionnées. Elles demeurent identifiables distinctement ; elles sont structurellement indépendantes l'une de l'autre : Il est possible de couper l'enveloppe 7 et de la retirer de sa position autour la structure fibreuse 5 sans avoir à l'en arracher. Ce n'est donc pas un revêtement ou une couche de surface (coating en anglais, comme dans US4035215).

S'il s'agit d'un « film », le matériau 7a présentera favorablement une épaisseur comprise entre 30 et 800 microns, de préférence entre 50 et 150 microns.

Dans l'hypothèse d'une structure poreuse 5, comme par exemple des fibres 3 sans liant (voir ci-après et figure 8, dans une forme brut du produit, avant mise sous enveloppe et thermoformage) mais réunies dans un feutre, on conseille que l'ensemble 1 présente une épaisseur maximale inférieure ou égale à 20mm, de préférence à 8mm et encore de préférence à 3mm. Et si on utilise un film à base polymère thermoformé 7a, on recommande qu'il présente alors une résistance à la traction telle que le maintien de l'intégrité recherchée de la forme 3D soit assuré.

Cette résistance à la traction (« tensile strength » en anglais/ UTS, souvent abrégé en (TS), ou « ultimate strength », Ftu) d'un film 7a type, que ce soit dans une version après l'étape précitée de thermoformage, ou avant (état de ce film tel que commercialisé avant sa mise en oeuvre conformément à la présente invention), sera favorablement supérieure à 1MPa, et de préférence comprise entre 10MPa et 300MPa et encore préférentiellement entre 50MPa et 100MPa.

Si on ne respecte pas ces caractéristiques, le caractère relativement libre de la structure poreuse 5 et la résistance mécanique de l'enveloppe 7, dont le thermoformage aura donc figé une forme « 3D » commune par contrainte de ladite structure et ramollissement du film 7a, ne pourront assurer à l'ensemble thermoformé 1 un maintien en forme 3D dans le temps :
- suite au relâchement de contrainte de la structure poreuse après thermoformage,
- et le film d'enveloppe ne pourra empêcher cela.

De là une possible préférence pour une paroi 7a métallique un peu plus épaisse.

Comme on y revient ci-après aussi en liaison avec la figure 6, on pourra en outre, avec de telles caractéristiques, obtenir que l'ensemble formé 1 présente des premières zones 10a1 ayant une première épaisseur e1 et des deuxièmes zones 10b1 ayant une deuxième épaisseur e2 supérieure à la première épaisseur e1 (e1 <e2), les premières zones 10a1 présentant une densité en structure poreuse 5 supérieure à celle des deuxièmes zones 10b1 ; voir figure 7 où, si l'épaisseur maximale est supposée être e2, on aura e2≤8mm et de préférence e2≤3mm.

Si la structure poreuse 5 est sans liant 9, les densités respectives de matériau poreux 3 dans les premières zones 10a1 et deuxièmes zones 10b1 seront chacune uniformes (égales) sur toutes les épaisseurs respectives e1,e2. Ces variations de densités entre les zones telles que 10a1,10b1 pourront être atteintes en partant d'épaisseurs différentes de ces zones entre elles (respectivement e1+X et e2+X). La compression globalement uniforme sur la surface extérieure de la structure poreuse 5, créée lors du thermoformage de la paroi barrière 7a, permettra d'atteindre les épaisseurs précitées, respectivement e1 et e2.

En seconde hypothèse, il est donc possible que, dans la structure poreuse 5, soit présent un liant d'apport 9 chimique. Une fois comprimé/mis en forme 3D, le matériau poreux 3 conservera alors de lui-même cet état. La technique de fabrication peut être celle de EP-A-2903800, une structure fibreuse et un procédé de fabrication sont connus par les documents DE 103 24 735. En tant que liant 9, on pourra utiliser de la résine époxy ou phénolique.

On peut alors prévoir que l'ensemble formé 1 présente une épaisseur maximale e,e2,e3 supérieure à 3mm. Le liant 9 participe tant à la mise à la forme de la structure poreuse 5 (lors du thermoformage) qu'au maintien de l'intégrité de sa forme, dans le temps.

Pour l'utilisation d'un liant 9 réagissant à la chaleur, comme du polypropylène, ou une résine phénolique, on chauffera de façon que le matériau poreux fonde et qu'une pièce moulée rigide, indéformable, soit formée.

Avec ou sans liant 9, le formage de l'ensemble 1 pourra intervenir dans un moule 30a ou 30b (figures 11-13) de mise en forme :
- a) le matériau de la structure 5 brute, sous forme a priori 2D (plaque ou bloc en particulier ; en une ou plusieurs pièces) et dans un état comprimé (comme l'est par exemple un feutre), est d'abord interposé entre deux surfaces majeures S1,S2 de ladite paroi barrière 7a, comme figure 12,
- b) puis, par contact entre les deux surfaces (périphériques) mineures 7b1,7b2 (cf. figure 1, donc de plus petites superficies que celles majeures précitées et qui, ensemble, forment donc ladite surface ou zone périphérique mineure/marginale) de cette paroi 7a, on ferme de façon étanche à l'air l'enveloppe 7,
- c) et on y établit une pression réduite comprise entre moins de 10⁵ Pa et plus de 10⁻² Pa,
- d) en outre, une fois l'enveloppe 7 fermée, on donne à la structure poreuse 5 la forme en trois dimensions attendue, cintrée et/ou avec des reliefs 21 et/ou creux 23, par pression de l'enveloppe contre ledit moule, permettant ainsi une déformation de la paroi barrière 7a et de la structure poreuse 5.

Bien qu'une paroi 7a exclusivement métallique de quelques dixièmes de mm d'épaisseur puisse convenir, on pourra préférer, lors de l'étape a), choisir une paroi thermoformable, puis, lors de l'étape d), chauffer cette paroi de sorte que les deux surfaces majeures S1,S2 chauffées ramollissent. On profitera alors de cette ductilité pour mettre en forme sous pression, par moulage, la paroi 7a et le matériau de la structure 5. On laisse ensuite refroidir le tout.

Si on choisit l'option film polymère 7a, ce pourra être un film polyimide ou PEEK, ou polyéthylène, ou polypropylène.

Lors de l'étape d), le moulage peut comprendre un moulage entre une empreinte mâle 340a et une empreinte femelle 340b du moule 30a, comme figure 11.

Mais, pour faciliter la réalisation des formes, on pourra préférer que ladite déformation par pression contre le moule 30b comprenne :
- un moulage entre :
   -- une empreinte, mâle ou femelle, 340a ou 340b, de laquelle on approchera une première desdites deux surfaces majeures S1,S2, et
   -- une membrane déformable 340c qui, par dépression (flèche F figure 13), sera appliquée contre la seconde desdites deux surfaces majeures S1,S2,
- et un chauffage à la température de thermoformage du film polymère barrière 7a,
ceci jusqu'à donner à la structure poreuse 5, entre l'empreinte et la membrane 340c qui en épousera sensiblement la forme, une forme en trois dimensions, cintrée et/ou avec les reliefs et/ou les creux précités, comme figure 13.

La membrane déformable 340c pourra être en plastique souple ou à base de caoutchouc supportant une température de 140 à 200°C.

A l'ensemble 1 qui précède, on pourra utilement adjoindre, dans l'enveloppe 7, au moins un isolant thermique 11, de sorte qu'à température et pression ambiantes, l'ensemble 1 présente, à travers le film 7a, un coefficient de conductivité thermique (λ) inférieur à 40mW/m.K, et de préférence inférieur à 20mW/m.K; voir figure 2.

En outre, avec la paroi 7a de protection, l'isolant thermique 11 pourra alors utilement être dispersé dans la structure 5.

Avec un isolant thermique 11 sous forme de particules, une concentration variable suivent les endroits pourra être atteinte.

Même possibilité si l'ensemble 1 comprend en outre, dans l'enveloppe 7, au moins un matériau 13 à changement de phase (MCP), qui pourra donc être lui aussi dispersé dans la structure 5 (figure 3).

Les figures 4-6 montrent des exemples privilégiés, opérationnels, de densifications/dispersions variables du matériau 3 et des particules 11 et/ou 13, dans la structure poreuse 5, sous l'enveloppe 7.

Dans l'exemple de la figure 4, la structure 5 comprend, périphériquement, une surdensification ou surconcentration par exemple en fibres 3 et en (particules de) MCP 13. La surdensification en matériau 3 est située autour des zones de fixation de la pièce 1 correspondant aux passages traversants (cercles) dont certains sont référencés 15. Cette surdensification peut résulter d'un dosage initial, par exemple en fibres, plus important dans certaines zones que dans d'autres. Elle peut aussi résulter d'une compression plus importante dans certaines zones que dans d'autres.

Dans l'exemple de la figure 5, la structure 5 de la pièce 1 est plus fine en partie 10a2 (épaisseur e1), qu'elle ne l'est en partie(s) 10b2 (épaisseur e2). C'est en partie 10a2 plus fine que l'on trouve une sur-densification ou surconcentration en (particules d')isolant thermique 11, pour compenser la moindre épaisseur et conserver une conductivité thermique homogène.

Dans l'exemple de la figure 6, la structure poreuse 5 de la pièce 1 est surchargée en matériau 3 (densité augmentée en fibres, par exemple) en zones 10c par où la pièce peut être fixée via par exemple les tiges 17 et où la pièce présente des angles, donc des zones de potentielle faiblesse mécanique. Comme les zones 15, celles 10c définissent des zones intégrées de renfort ou de structuration mécanique, sans nécessité de renfort extérieur.

En zone(s) 10d la structure 5 est (sur)chargée en (particules) MCP 13, là où la pièce 1 présente une ou des zone(s) d'échange thermique avec un fluide frigorigène ou caloporteur 19. Ainsi, on peut précisément et à propos localiser les zones de (sur)densification ou (sur) concentration en particules et/ou fibres, là où le besoin est.

Comme déjà mentionné, un domaine notable d'application de l'invention est celui des véhicules. L'ensemble formé 1 en trois dimensions peut en particulier y définir un élément intérieur de doublure d'un élément structurel, ledit élément structurel séparant entre eux un environnement extérieur et un volume intérieur à isoler ou protéger thermiquement et acoustiquement de cet environnement extérieur, ceci avec des contraintes de volume exigu, de formes particulières et/ou de poids à limiter au maximum.

Aussi voit-on figure 9 un exemple d'assemblage 30, dans un véhicule 31 (ici une automobile, mais ce pourrait être un aéronef, notamment une cabine d'aéronef). Cet assemblage comprend :
- un élément structurel 33 interposé entre un environnement extérieur (EXT;35) d'un volume intérieur (INT;37) du véhicule, ce volume intérieur (typiquement l'habitacle du véhicule) étant à protéger thermiquement et acoustiquement de l'environnement extérieur 35, et
- un élément 39 intérieur de doublure de l'élément structurel 33, l'élément intérieur de doublure comprenant un ensemble 1 précité.

L'élément 39 de doublure est donc interposé entre les volumes 35 et 37.

L'élément structurel 33 peut être un panneau de porte, métallique, composite (cad. composé de plusieurs matériaux ; par exemple un mélange de résine synthétique et de fibres minérales, naturelles ou synthétiques) ou plastique. Il définit dans l'exemple le cadre structurel d'une portière d'automobile. Côté extérieur, peut être fixée à lui une tôle 41 de portière définissant l'habillage extérieur de la porte. Côté intérieur, peut être fixée à lui un habillage intérieur 43 (côté habitacle), de sorte que l'ensemble 1 soit interposé entre la tôle 41 et l'habillage intérieur 43.

La forme cintrée et/ou les reliefs 21 et/ou creux 23 de l'élément 1 sont engagé(s) au moins en partie avec la forme complémentaire, cintrée et/ou creux 231 et/ou reliefs 211, de l'élément 33 structurel, pour sensiblement en épouser une partie au moins du contour ; voir figure 9.

Dans l'enveloppe totalement fermée 7 de cet ensemble 1 peuvent en outre se trouver, comme schématisé figures 5,6 (que l'on peut considérer être deux coupes respectives, dans le sens de l'épaisseur, à deux endroits différents de la surface définie par l'ensemble 1, voir hachures figure 9) :
- au moins une zone 10d privilégiée (priority area en anglais) où a été identifié un échange thermique à maitriser entre l'environnement extérieur 35 et le volume intérieur 37,
- et/ou au moins une zone (10a) de moindre épaisseur (e1),
- et/ou une ou des zone(s) 10c de fixation, où l'ensemble 1 est fixé à la structure 33.

Ces fixations à l'élément structurel 33 pourront comprendre des vissages, rivetages ou autres, par exemple via des tiges 17.

Et l'enveloppe 7 contiendra alors en outre l'une au moins parmi :
- une charge en (particules d'un) matériau 13 à changement de phase (MCP) et/ou une charge en (particules d'un) isolant thermique 11, là où se trouve la ou lesdites zone(s) 10d privilégiées d'échange thermique,
- et/ou une surcharge en matériau 3, là où se trouve la ou les zone(s) de fixation et/ou là où se trouve la ou lesdites zone(s) de moindre épaisseur (e1).

Plutôt que, comme figure 6 où on trouve donc dans l'enveloppe 7 une charge de (particules de) MCP 13 là où la pièce 1 présente une ou des zone(s) d'échange thermique avec un fluide frigorigène ou caloporteur 19, on préférera ici une charge ou une surcharge en isolant thermique 11 (tel que au moins une couche de polyuréthane, ou des fibres de polyester dispersées dans la structure poreuse), là où se trouve la ou les zones 10d privilégiées d'échange thermique, c'est-à-dire là où on aura identifié, dans le sens de l'épaisseur (e) de l'enveloppe 7, une ou des zones où le coefficient de conductivité thermique local (λ) est plus élevé qu'un seuil prédéfini, entre les volumes 35 et 37.

Sur la figure 10, on a schématisé un autre assemblage perfectionné conforme à l'invention.

L'environnement est celui d'une partie de la caisse 44 d'un véhicule automobile 45 tout électrique ou hybride, ou d'un plateau 33a de protection fixé au compartiment batterie 36 et/ou à la caisse 44 du véhicule (on confond ici caisse et châssis du véhicule). Un pack de batteries électriques 47 d'alimentation électrique du véhicule, contenu dans le compartiment fermé 36, est à installer :
- dans le volume intérieur 37,
- ou à proximité immédiate de celui-ci, par exemple en extérieur juste sous la caisse 44, dans ledit compartiment 36, via par exemple le plateau 33a de protection qui peut être fixé à la caisse, sous elle, par vissage.

L'élément 33 structurel précité peut donc être défini par un plateau 33a de protection. Le plateau 33a, métallique, s'étend comme un plancher (ou est une partie de ce plancher) et assure une protection anti-gravillons, notamment. On en voit qu'une partie figure 10.

L'élément 39 précité intérieur de doublure e est ici défini par un ou plusieurs plateaux 390 comprenant un ou plusieurs éléments 1, à forme 3D (ici en partie incurvé), interposé(s) entre l'environnement extérieur 35 et une plaque 41 de refroidissement du pack de batteries 47.

La plaque 41 de refroidissement comprend des canaux 49 de circulation d'un fluide de refroidissement disposés en échange thermique avec le pack de batteries 47. En communication avec un échangeur thermique 51 disposé plus loin dans le véhicule, le fluide de refroidissement circule dans les canaux 49 via une entrée 49a et une sortie 49b qui communiquent avec les canaux 49. Le dessous de la plaque support 53 sur laquelle repose le pack de batteries électriques 47 forme un couvercle vis-à-vis des canaux 49 qui sont en appui étanche contre lui, par leurs rebords. En complément ou alternative la plaque support 53 peut être une partie du compartiment batterie dans lequel le pack de batteries 47 est enfermé. Pour former barrière thermique par rapport à l'environnement extérieur 35, surtout pour le pack de batteries 47, le(chaque) élément 1 isolant thermique est pris en sandwich entre la plaque 33a et la plaque 41 de refroidissement.

Ses faces inférieure 41a et supérieure 41b étant l'image inversée l'une de l'autre, la plaque 41 présente des reliefs et des creux, dont certains au moins sont définis par les canaux 49, en face supérieure. Le plateau 33a de protection présente aussi des reliefs 330 et des creux 331.

Et le(chaque) élément 1 présente lui-même, comme déjà indiqué, desdits reliefs 210 et creux 230, ceci ici sur les deux surfaces majeures (inférieure et supérieure) de la paroi barrière thermoformée ; mais ces reliefs et creux sont différents en faces inférieure et supérieure, puisqu'on regard, les reliefs et creux de la plaque 33a et de la plaque 41 sont différents entre eux, mais complémentaires de ceux du(des) élément(s) 1.

Grâce à cela, sur lesdites surfaces majeures de la paroi barrière (7a) :
- les reliefs respectifs du(de chaque) élément 1 sont engagés avec les creux respectifs de la plaque 41 de refroidissement et du plateau 33a de protection,
- et lesdits creux respectifs du(de chaque) élément 1 sont engagés avec les reliefs respectifs de la plaque 41 de refroidissement et du plateau 33a.

Il doit par ailleurs être compris que les solutions associables entre les modes de réalisation, comme entre les figures sont transférables d'une réalisation à l'autre et peuvent être ainsi associées entre elles.

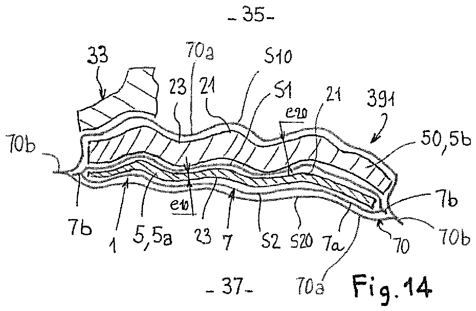

Un autre aspect performant a été schématisé figure 14. Il s'agit d'une solution où on va pouvoir traiter des problèmes tant thermique qu'acoustique de façon affinée.

Cette solution propose en effet d'obtenir une isolation thermique renforcée et une isolation acoustique pertinente, en associant :
- avec un élément 33 structurel séparant donc un environnement extérieur 35 d'un volume intérieur 37 à protéger thermiquement et acoustiquement,
- un élément 391 intérieur de doublure de l'élément structurel 33, l'élément 391 comprenant au moins un dit élément 1 isolant thermique.

Plus précisément, il est proposé d'abord de reprendre l'assemblage précité, avec donc ledit au moins un élément 1 isolant thermique comprenant sa structure poreuse 5 dans son enveloppe 7 formée par la paroi barrière 7a, comme par exemple sur la figure 4 pour une vue en plan. Cette paroi 7 est toujours thermoformée à l'endroit desdites deux surfaces majeures (S1,S2) entre lesquelles la structure poreuse 5, qui est en trois dimensions, présente donc une forme cintrée et/ou des reliefs et/ou des creux, comme schématisé.

Toutefois, dans cette solution il est en outre prévu :
- que cette structure poreuse 5 définisse une première structure poreuse comprenant un matériau poreux 5a ayant une première densité,
- que l'élément 391 intérieur de doublure comprenne en outre une deuxième structure poreuse 50 comprenant le même matériau poreux (5a), ou un matériau poreux 5b différent, ayant une deuxième densité.

La deuxième densité est inférieure à la première densité, et la première structures poreuses 5 est superposée avec la deuxième structure poreuse 50.

Superposé a ici pour sens qu'on a ainsi une double épaisseur : celles cumulées des structures poreuses 5,50 entre les zones 35 et 37. Ensemble, superposées, les deux structures peuvent se présenter comme sur la figure 4, suivant une vue en plan, la structure poreuse 50 étant juste dessous celle repérée 5 que l'on voit.

La superposition de ces structures n'est pas nécessairement dans un plan horizontal ; elle peut être par exemple dans un plan vertical, comme dans l'exemple d'une portière d'automobile figure 9. A noter à ce sujet que d'autres applications que sur un véhicule sont possibles ; dans le bâtiment par exemple.

Ceci précisé, on notera encore :
- que la deuxième structure poreuse 50 présente une forme cintrée et/ou des reliefs 21 et/ou des creux 23, et
- que l'élément 1 isolant thermique et la deuxième structure poreuse 50 sont :
   -- enfermés ensemble dans une deuxième enveloppe 70 à paroi 70a,
   -- et interposés entre deux surfaces majeures S10,S20 de ladite paroi 70a, cette paroi 70a étant thermoformée à l'endroit desdites deux surfaces majeures S10,S20.

On aura compris que les deux surfaces majeures S10,S20 sont l'image sur l'enveloppe 70 et sa paroi 70a des deux surfaces majeures S1,S2 sur l'enveloppe 7 et sa paroi 7a. La zone périphérique mineure/marginale en terme de surface, ici 70b image de 7b, demeure.

La deuxième enveloppe 70 n'est pas nécessairement sous vide. La deuxième structure poreuse 50 peut être dans une troisième enveloppe sous vide, elle-même donc alors logée, avec la première enveloppe 70, dans la deuxième enveloppe 70.

Typiquement moins comprimée que la première structure poreuse 5, la deuxième structure poreuse 50 présentera une épaisseur e20 supérieure à l'épaisseur e10 de la première structure poreuse 5, ceci étant à considérer partout ou sur l'essentiel au moins de la plus grande des surfaces des deux structures poreuses 5,50.

L'épaisseur e20 peut être de 3 à 15mm. L'épaisseur e10 peut être de 0.5 à 2.5mm. La première densité peut être de plus de 100 à 800kg/m³ ; la deuxième densité peut être de 5 à moins de 100kg/m³.

La première structure poreuse 5 assure des isolations thermique et acoustique pertinentes. La deuxième structure poreuse 50 assure une isolation thermique renforcée et une isolation acoustique plus limitée en basse fréquences, mais bonne en hautes fréquences. On obtient ainsi une solution hybride avec une assemblage lourd (à effet de masse) qui absorbe dans les basses fréquences (20 à 200 Hz) par la première structure poreuse 5 et en hautes fréquences (supérieures à 200Hz) par la deuxième structure poreuse 50.

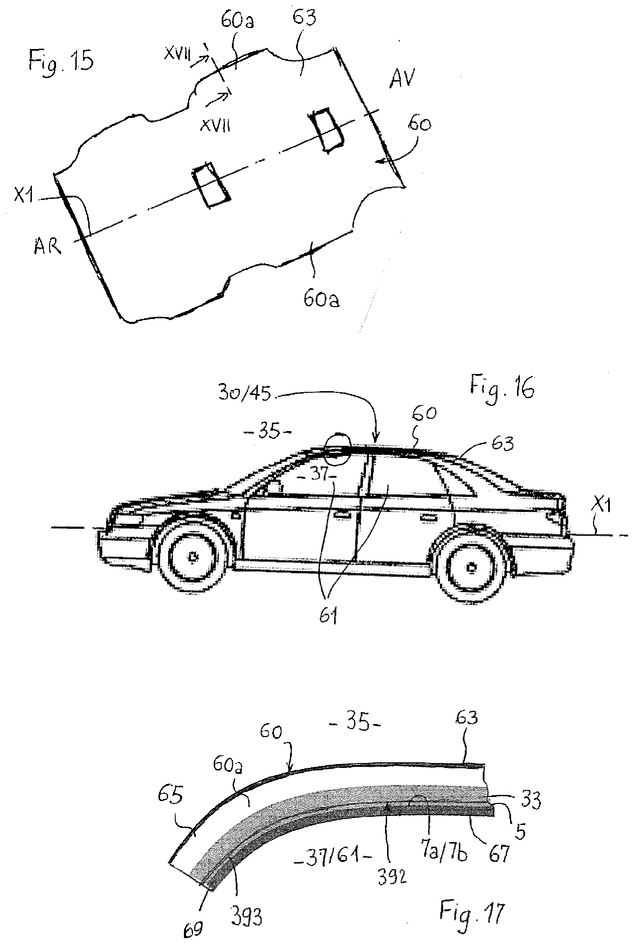

Plusieurs autres applications sont encore présentées ci-après, en référence aux figures 15 et suivantes.
a) D'abord celle relative :
   - à une partie de caisse de véhicule (30 ou 45), tel un pavillon (ou partie de toit) 60, ou plus généralement
   - à une structure de limitation d'habitacle 61 de véhicule.

Les montants ou la caisse et leur habillage dans l'habitacle sont donc concernés.

Le terme habitacle est à comprendre comme « espace recevant des occupants à transporter » et un aéronef est un « véhicule » ; donc un fuselage d'aéronef est aussi concerné.

Dans l'exemple des figures 15-17, c'est un angle de pavillon qui est localisé. Le pavillon (ou partie de toit) 60 comprend successivement, dans le sens de l'épaisseur, de l'environnement extérieur 35 vers le volume intérieur 37 (habitacle 61) :
- la carrosserie 63 (qui pourrait être le fuselage), partie structurante plastique, métallique ou composite avec, en doublure intérieure :
- une couche d'air 65 (5 à 15mm d'épaisseur ; souvent 8 à 12mm), puis l'assemblage déjà présenté comprenant :
   -- un élément 33 structurel, comme précédemment interposé entre l'environnement extérieur 35 et le volume intérieur 37 à protéger,
   -- et un dit élément intérieur 393 de doublure de l'élément structurel 33, l'élément intérieur de doublure comprenant donc au moins un dit élément 1 isolant thermique en trois dimensions, sous vide, l'élément (1) isolant thermique comprenant (non illustrées):
      --- la structure poreuse 5 en trois dimensions, comprimée,
      --- l'enveloppe 7 fermée de façon étanche à l'air et dont la paroi barrière 7a (et/ou 7b) est thermoformable,
- et un revêtement souple ou doublure d'habillage intérieure (ou « liner ») 67. Typiquement, le revêtement (ou « liner ») 67 peut être un tissu (fils entrelacés à mailles ou tissés ou non) et est doublé intérieurement par une couche de mousse 69, entre la paroi barrière 7a et le revêtement 67.

La couche de mousse 69 et le revêtement 67 peuvent faire 2 à 5mm d'épaisseur, ensemble, l'élément 1 isolant thermique 3 à 6mm, élément 33 structurel 4 à 10mm.

L'élément 33 structurel (qui peut être composite) forme en fait une deuxième partie de dit « élément structurel », la première partie étant formée par la carrosserie 63 extérieure.

La figure 15 permet de schématiser une vue approximative de dessus de la partie de toit 60 du véhicule qui est doublée par la structure présentée ci-après ; l'avant de l'habitacle (du véhicule) est AV, l'arrière AR ; les limites schématiques sont tracées figure 15 ; l'élément 1 isolant thermique peut être en une ou plusieurs parties pour en occuper l'essentiel au moins de la surface. L'axe longitudinal est X1. A travers la partie du toit 60 (et du/des éléments 1 isolants thermiques, si nécessaire) peuvent être prévus des passages 71a,71b, pour les éclairages de plafond respectivement en places avant et en places arrière.

Suivant la ligne de coupe transversale XVII-XVII, la partie du toit 60 est arrondie latéralement, en 60a (idem du côté opposé, en 60b), notamment. Ainsi, la structure poreuse 5, qui est en trois dimensions, est au moins cintrée, comme on le schématise figure 17, avec un détail selon 0par exemple figure 3 ou 14.

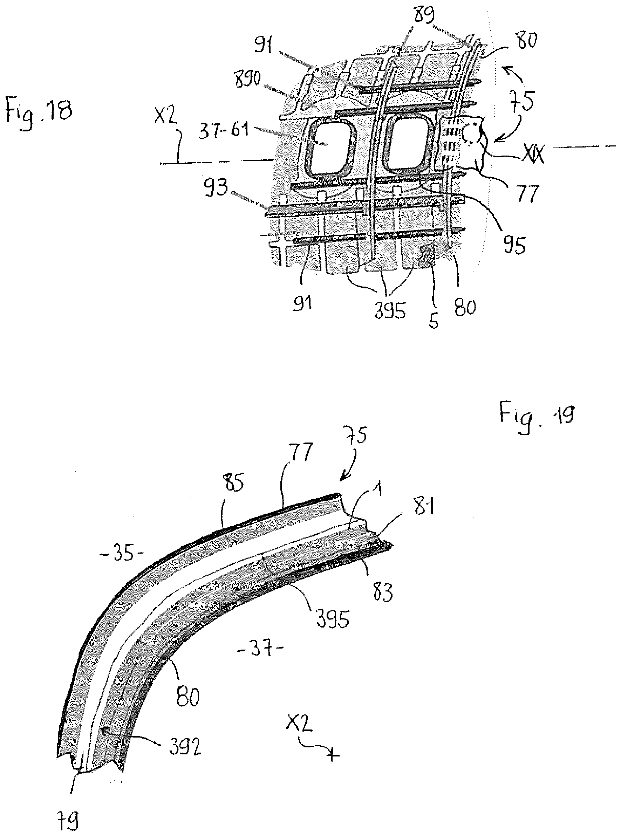

b) Ensuite (voir figures 18-20) celle relative à l'isolation d'un fuselage d'aéronef 75, dans la mesure où il peut s'agir d'une variante de celle des figures 15-17, dans l'application fuselage/habitacle d'aéronef.

Comme schématisé sur ces figures 18,19, une paroi de fuselage 75 (qui est une sorte de caisse) comprend successivement, dans le sens de l'épaisseur, de l'environnement extérieur 35 vers le volume intérieur (habitacle) 37:
- en tant qu'élément structurel précité et, comme précédemment, interposé entre l'environnement extérieur 35 et le volume intérieur 37 à protéger, des tôles (formant la peau extérieure que l'on voit à extérieur de l'aéronef) 77, parties structurantes typiquement métalliques ou composites avec donc, en doublure intérieure :
- une couche d'air 79 (50 à 150mm d'épaisseur; souvent 60 à 100mm), puis l'assemblage déjà présenté comprenant au moins un dit élément intérieur (395) de doublure de l'élément structurel 77, l'élément intérieur de doublure comprenant donc (bien que non illustré ici) au moins un dit élément 1 isolant thermique en trois dimensions, sous vide, l'élément 1 isolant thermique comprenant :
   -- la structure poreuse 5 en trois dimensions, comprimée,
   -- l'enveloppe 7 fermée de façon étanche à l'air et dont la paroi barrière 7a (et/ou 7b) est thermoformable, et.
- un revêtement (ou garniture intérieure) 80 d'habillage (souple ou non) qui double intérieurement ledit au moins un élément 1 isolant thermique.

Toujours dans le sens de l'épaisseur, on pourra aussi préférer :
- qu'une couche dite primaire 81 de matériau d'isolation thermique (par exemple un matériau fibreux ensaché) et acoustique soit interposée entre ledit au moins un élément 1 isolant thermique et ledit revêtement 80 d'habillage (qui forme la paroi « de surface » ou la plus intérieure de la paroi de fuselage 75 / celle que l'on voit qui on est dans le compartiment passager (dit « intérieur » 37/61), et/ou
- qu'une couche de mousse 83 soit interposée entre la couche dite primaire 81 et le revêtement 80.

Pour renforcer encore l'isolation, il se peut qu'une couche dite secondaire 85 d'isolation thermique et acoustique soit interposée entre des tôles 77 et la couche d'air 79.

Les tôles 77 sont typiquement d'une épaisseur de 1.5 à 3mm ; les couches primaire et secondaire 81,85 de 15 à 30mm.

Hors les tôles 77, une partie au moins des éléments précités (formant donc l'ensemble 75 figures 18-19) pourra être séparé des tôles, toujours dans le sens de l'épaisseur, par des cadres 89 (y compris des cadres 890 de hublot 95) et/ou, lisses 91 et/ou longerons 93.

Comme pour la partie du toit 60, suivant une ligne de coupe parallèle à l'épaisseur de la paroi globale de fuselage 75, cette paroi présente une forme cintrée, comme illustré figures 18-19, voire des reliefs et/ou des creux, par exemple à l'endroit (autour) de hublots 95. Ainsi, là encore, notamment la structure poreuse 5, qui est en trois dimensions, est au moins cintrée, comme on l'a schématisé à l'endroit de l'arrachement figure 19.

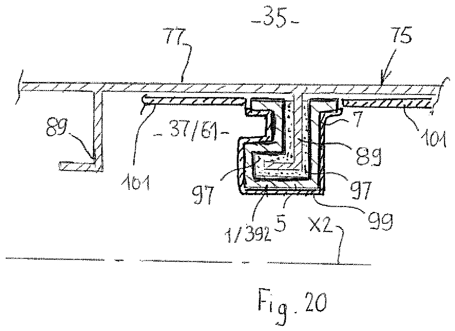

c) Ensuite encore (voir figure 20) est schématisée une réalisation relative de nouveau à l'isolation d'un fuselage 75, mais à l'endroit de cadres 89 ; ce pourrait toutefois être des lisses 91, voir des longerons 93, tous fixés (par exemple par soudage) avec les tôles 77 qui les recouvrent.

De façon conventionnelle, les structures les plus structurantes sont les longerons 93 qui, comme les lisses 91, s'étendent parallèlement à l'axe longitudinal (axe avion) X2. Les cadres 89 s'étendent circonférentiellement, autour de l'axe X2.

Dans ce cas, ledit « élément structurel » de l'assemblage d'isolation déjà présenté est considéré comme étant l'ensemble formé par la peau extérieure (définie par les tôles 77) et les cadres, ou les lisses ou les longerons, fixés avec de façon radialement intérieure. Comme schématisé, la solution proposée est d'équiper une partie au moins de cet ensemble en isolant individuellement les cadres dans l'exemple, chacun avec donc un élément 397 intérieur de doublure comprenant au moins un dit élément 1 isolant thermique en trois dimensions, sous vide, l'élément 1 isolant thermique comprenant toujours :
-- la structure poreuse 5 en trois dimensions, comprimée,
-- l'enveloppe 7 fermée de façon étanche à l'air et dont la paroi barrière est thermoformable.

L'élément 1 isolant thermique peut être recouvert d'un revêtement esthétique 99 (tel qu'un liner) que l'on peut retrouver en 101 en doublure intérieure de la peau extérieure/des tôles 77.

Dans l'exemple, les parties isolées (cadres 89) font saillie des tôles 77 radialement vers l'intérieur. Chaque élément 1 isolant thermique s'étend autour de la partie accessible du cadre concerné. Il peut en épouser la forme, du fait que la paroi barrière 7a (et/ou 7b ; non figurées) a été thermoformée et la structure poreuse 5 (idem) est en trois dimensions et a été mise en forme par compression. Les deux éléments 1 et 89 sont alors engagés ensemble.

On a donc là une solution qui combine efficacité d'isolation, légèreté, encombrement réduit, facilité de mise en place et de maintenance.

Entre la partie isolée (cadre 89) considérée et l'élément 1 isolant thermique qui s'étend autour, on peut même interposer une couche d'isolant traditionnel 97 (tel de la laine de verre) dont le maintien en place est facilité/assuré par la forme figée de l'élément 1 isolant thermique, lequel peut être fixé à ladite partie isolée (cadre 89), par collage ou autre.

En termes de fixation ou maintien, la cohésion entre les éléments de la partie du toit 60 ou de l'ensemble (ou structure de fuselage) 75 peut par exemple être assurée par des collages et/ou vissages, avec si nécessaire présence d'entretoises.

L'ensemble est composé de deux structures à couches enveloppées ou non dans un sachet 70 :
- la première (élément 5) est un matériau poreux (densité plus de 100 à 800kg/m3) dans une enveloppe sous vide de type PIV,
- la seconde (élément 50) est un matériau poreux de très (plus) faible densité (de 5 à moins de100kg/m3) qui possèdent de bonnes propriétés d'isolation thermique et de bonne propriété d'absorption acoustique en hautes fréquences (supérieures à 200Hz).

L'ensemble permet donc d'assurer un bon compromis d'isolation thermo-acoustique.

A noter que la solution décrite en liaison avec la figure 14, ou avec lesdites première et deuxième structures poreuses revendiquées, peut trouver une application dans la solution des figures 18-20 ou sa généralisation revendiquée :
- cadre (ou équivalent) froid: un élément isolant (tel un bloc, par exemple de laine de verre) de faible densité ensaché avec le PIV 5/7 dans une enveloppe 70 à film 70a anti-feu (répondant aux spécifications UL94 V0 et/ou FAR 25.856) est fixé à des cadres 89 et/ou à au moins un panneau de tôle 77, pour assurer les propriétés thermo-acoustiques attendues ;
- fuselage: un élément isolant (par exemple de laine de verre, correspondant à ladite deuxième structure poreuse 50 et comprenant un matériau poreux 5a ou 5b), assimilable à la couche d'isolation primaire 81 et ensaché avec le PIV 5(5a)/7 dans une enveloppe 70 à film 70a anti-feu est fixé aux cadres, lisses ou longerons et/ou à au moins un panneau de tôle 77 et/ou au revêtement 80, pour assurer les propriétés thermo-acoustiques attendues ;

Dans l'application à la paroi d'habitacle comme figures 15-17, ou sa transposition revendiquée, l'enveloppe 70 extérieure à film 70a est facultative : le PIV défini par l'élément 5 dans son enveloppe étanche 7 est combiné à l'isolant formé par ladite deuxième structure poreuse 50 (par exemple de laine de verre ou une mousse) fixé par exemple aux extrémités latérales du toit (accroche mécanique ou chimique). La couche d'air 65 peut être établie par des entretoises, non représentées.

Bien que non illustré, l'élément 1 isolant thermique des solutions présentées en liaison avec les figures 15-20 pourra avantageusement être complété de telle sorte que l'élément intérieur de doublure (392 figures 17,19,20) comprenne en outre une deuxième structure poreuse 50 comprenant le même matériau poreux 5a, ou un matériau poreux 5b différent, ayant une deuxième densité, la deuxième densité étant inférieure à la première densité et les première et deuxième structures poreuses (5,50) étant superposées, comme figure 14.

## Revendications

1. Assemblage comprenant :
- un élément (33) structurel interposé entre un environnement extérieur (35) et un volume intérieur (37) à protéger,
- et un élément intérieur (39,390,391,392) de doublure de l'élément structurel (33), l'élément intérieur de doublure comprenant au moins un élément (1) isolant thermique, sous vide, qui comprend :
- une structure poreuse (5) comprimée, définissant une première structure poreuse comprenant un matériau poreux (5a) ayant une première densité,
- une première enveloppe (7) fermée de façon étanche à l'air :
-- comprenant une première paroi barrière (7a) thermoformable et étanche à l'air,
-- dans laquelle première enveloppe est enfermée la première structure poreuse (5) dont la forme est suivie par la première paroi barrière (7a), et
-- dans laquelle première enveloppe règne, à température et pression extérieures ambiantes, une pression comprise entre moins de 10⁵Pa et plus de 10⁻² Pa, l'élément intérieur (39,390,391,392) de doublure comprenant en outre une deuxième structure poreuse (50) comprenant le même matériau poreux (5a), ou un matériau poreux (5b) différent, ayant une deuxième densité, la deuxième densité étant inférieure à la première densité, les première et deuxième structures poreuses (5,50) étant superposées,
**caractérisé en ce que**, pour protéger thermiquement et acoustiquement le volume intérieur (37), ledit assemblage est en outre tel que :
- le matériau poreux de la première structure poreuse (5) présente une densité comprise entre plus de 100kg/m3 et 800kg/m3, et le matériau poreux de la seconde structure poreuse (50) présente une densité comprise entre 5kg/m3 et moins de 100kg/m3,
- la deuxième structure poreuse (50) présente une épaisseur (e20) supérieure à l'épaisseur (e10) de la première structure poreuse,
- l'élément (33) structurel et ledit au moins un dit élément (1) isolant thermique sont en trois dimensions, présentant ainsi une forme cintrée et/ou des reliefs et/ou des creux,
- la première structure poreuse (5), en trois dimensions, présente une forme cintrée et/ou des reliefs et/ou des creux,
- la forme cintrée et/ou les reliefs et/ou les creux dudit au moins un élément (1) isolant thermique est/sont engagé(s) au moins en partie avec la forme cintrée et/ou les reliefs et/ou les creux de l'élément (33) structurel, pour sensiblement en épouser une partie au moins du contour,
- la deuxième structure poreuse (5,50) présente une forme cintrée et/ou des reliefs et/ou des creux, et
- l'élément isolant thermique (1) et la deuxième structure poreuse (50):
-- sont enfermés ensemble dans une deuxième enveloppe (70) qui n'est pas sous vide,
-- et sont interposés entre deux surfaces majeures (S10,S20) d'une paroi (70a) de la deuxième enveloppe (70), dite deuxième paroi (70a), laquelle est thermoformée à l'endroit desdites deux surfaces majeures, la surface mineure d'une paroi étant à comprendre comme la zone où il y a inter-liaison des feuilles, ou portions de feuille, formant la paroi barrière et où celles-ci sont scellées entre elles pour fermer l'enveloppe, de façon complémentaire, la surface majeure de la même paroi étant à comprendre comme la zone de l'enveloppe délimitée par cette zone de scellement.

2. Assemblage selon la revendication 1, dans lequel la première enveloppe (7) présente intérieurement:
- localement, une ou des zone(s) (10d) d'échange thermique avec un fluide frigorigène ou caloporteur (19),
- et/ou une ou des zone(s) (10a1,10a2) de moindre épaisseur (e1) située(s) à l'écart de la ou des zone (7b) où la première enveloppe (7) est fermée de façon étanche à l'air,
- et/ou une charge locale d'un matériau à changement de phase (MCP ; 13),
- et/ou une charge locale d'un isolant thermique (11), là où se trouve la ou lesdites zone(s) privilégiées d'échange thermique,
- et/ou une surdensité en matériau poreux (3) par rapport à d'autres zones en matériau poreux, là où se trouve la ou les zone(s) de fixation et/ou là où se trouve la ou lesdites zones (10d) privilégiées, et/ou là où se trouve la ou lesdites zone(s) de moindre épaisseur (e1).

3. Assemblage selon l'une quelconque des revendications précédentes, dont le ou chaque élément (1) isolant thermique présente une épaisseur maximale inférieure ou égale à 20mm, et dans lequel :
- la première structure poreuse (5) est dépourvue de liant chimique (9) et présente une densité comprise entre 10 kg/m³ et 300kg/m³, et
- la première paroi barrière (7a) thermoformé présente une résistance à la rupture et sur toutes les faces de la première structure poreuse, une forme non plane qui impose la forme de la première structure poreuse (5), de telle sorte que la première enveloppe (7) maintient la forme de la première structure poreuse (5).

4. Assemblage selon la revendication 1 ou 2, dans lequel la première structure poreuse (5) comprend un liant chimique (9).

5. Assemblage selon l'une quelconque des revendications précédentes dans lequel :
- la première structure poreuse (5) est interposée entre deux surfaces majeures (S1,S2) de ladite première paroi barrière (7a), et
- la première paroi barrière (7a) est thermoformée à l'endroit desdites deux surfaces majeures (S1,S2), et
- entre lesdites deux surfaces majeures (S1,S2) de la première paroi barrière (7a), la première structure poreuse (5) présente des premières zones (10b2) ayant une première épaisseur (e2) et des deuxièmes zones (10a1) ayant une deuxième épaisseur (e1) inférieure à la première épaisseur (e2), les deuxièmes zones présentant une densité en matériau poreux (3) supérieure à la densité en en matériau poreux (3) des premières zones.

6. Assemblage selon l'une quelconque des revendications précédentes, dans lequel :
- l'élément structurel (33) est un panneau de porte, métallique, composite ou plastique, qui définit un cadre structurel d'une portière d'automobile, et
- l'assemblage comprend en outre :
-- d'un côté extérieur de l'élément structurel (33), une tôle (41) de portière définissant un habillage extérieur de la porte et qui est fixée à l'élément structurel (33), et,
-- d'un côté intérieur de l'élément structurel (33), un habillage intérieur (43) fixé à l'élément structurel (33), de sorte que l'élément intérieur (39) de doublure comprenant ledit élément (1) isolant thermique est interposé entre la tôle (41) de portière et l'habillage intérieur (43).

7. Assemblage selon l'une quelconque des revendications 1 à 5, dans lequel :
- l'élément (33) structurel est une partie de caisse (44) d'un véhicule ou un plateau (33a) de protection, et
- l'élément intérieur (390) de doublure est interposé entre l'environnement extérieur (35) et une plaque (41) de refroidissement d'un pack de batteries d'alimentation électrique du véhicule disposées dans le volume intérieur (37), lequel véhicule est de type hybride ou tout électrique, ledit au moins un élément (1) isolant thermique étant pris en sandwich entre la plaque (33a) de protection (33) et la plaque (41) de refroidissement, laquelle comprend des canaux de circulation d'un fluide de refroidissement disposés en échange thermique avec le pack de batteries.

8. Assemblage selon la revendication 7, dans lequel :
- la plaque (41) de refroidissement présente des reliefs et des creux, dont certains au moins sont définis par les canaux de circulation du fluide de refroidissement,
- l'élément (33) structurel présente desdits reliefs et desdits creux,
- ledit au moins un élément (1) isolant thermique présente desdits reliefs et desdits creux sur les deux surfaces majeures de ladite première paroi barrière (7a), et
- sur lesdites surfaces majeures de ladite première paroi barrière (7a)
-- lesdits reliefs respectifs dudit au moins un élément (1) isolant thermique sont engagés avec les creux respectifs de la plaque (41) de refroidissement et de l'élément (33) structurel,
-- lesdits creux respectifs dudit au moins un élément (1) isolant thermique sont engagés avec les reliefs respectifs de la plaque (41) de refroidissement et de l'élément (33) structurel.

9. Assemblage selon l'une quelconque des revendications 1 à 5, dans lequel :
- l'élément (63,77) structurel comprend une partie de caisse (60,75) d'un véhicule automobile entourant un habitacle (61) du véhicule, et
- l'assemblage comprend en outre, depuis l'élément (63,77) structurel vers ledit au moins un élément (1) isolant thermique, une couche d'air (65) puis une autre partie d'élément structurel (33).

10. Assemblage selon l'une quelconque des revendications 1 à 5, dans lequel :
- l'élément (63,77) structurel comprend une partie de fuselage (75) d'aéronef entourant un compartiment passager (61), et
- l'assemblage comprend en outre, entre l'élément (63,77) structurel et ledit au moins un élément (1) isolant thermique, une couche d'air (79) d'épaisseur au moins égale à 20mm.

11. Assemblage selon l'une quelconque des revendications 1 à 5, dans lequel l'élément structurel comprend :
- des panneaux extérieurs (63,77) appartenant à une partie de fuselage (75) d'aéronef et, fixés à eux intérieurement,
- des cadres (89) et/ou des lisses (91) et/ou des longerons (93), lesquels sont individuellement entourés par au moins un dit élément (1) isolant thermique et par ladite deuxième structure poreuse (50).

## Patentansprüche

1. Baugruppe, enthaltend:
- ein Strukturelement (33), das zwischen einer Außenumgebung (35) und einem abzuschirmenden Innenraum (37) eingefügt ist,
- und ein innenliegendes Auskleidungselement (39, 390, 391, 392) zum Auskleiden des Strukturelements (33), wobei das innenliegende Auskleidungselement zumindest ein wärmeisolierendes Element (1) unter Vakuum aufweist, das enthält:
- eine komprimierte poröse Struktur (5), die eine erste poröse Struktur definiert, die ein poröses Material (5a) mit einer ersten Dichte enthält,
- eine luftdicht verschlossene erste Hülle (7),
-- die eine thermoformbare, luftdichte erste Sperrwand (7a) aufweist,
-- in welcher ersten Hülle die erste poröse Struktur (5) eingeschlossen ist, deren Form von der Sperrwand (7a) gefolgt wird, und
-- in welcher ersten Hülle bei äußerer Raumtemperatur und Umgebungsdruck ein Druck zwischen weniger als 10⁵ Pa und mehr als 10⁻² Pa herrscht, wobei das innenliegende Auskleidungselement (39, 390, 391, 392) ferner eine zweite poröse Struktur (50) enthält, die das gleiche poröse Material (5a) oder ein anderes poröses Material (5b) mit einer zweiten Dichte enthält, wobei die zweite Dichte geringer als die erste Dichte ist, wobei die erste und die zweite poröse Struktur (5, 50) übereinander angeordnet sind,
**dadurch gekennzeichnet, dass** zur thermischen und akustischen Abschirmung des Innenraums (37) die Baugruppe derart ausgeführt ist, dass
- das poröse Material der ersten porösen Struktur (5) eine Dichte zwischen mehr als 100 kg/m³ und 800 kg/m³ aufweist, und das poröse Material der zweiten porösen Struktur (50) eine Dichte zwischen 5 kg/m³ und weniger als 100 kg/m³ aufweist,
- die zweite poröse Struktur (50) eine Dicke (e20) aufweist, die größer als die Dicke (e10) der ersten porösen Struktur ist,
- das Strukturelement (33) und das zumindest eine wärmeisolierende Element (1) dreidimensional ausgebildet sind und somit eine gebogene Form und/oder Erhebungen und/oder Vertiefungen aufweisen,
- die dreidimensional ausgebildete erste poröse Struktur (5) eine gebogene Form und/oder Erhebungen und/oder Vertiefungen aufweist,
- die gebogene Form und/oder die Erhebungen und/oder Vertiefungen des zumindest einen wärmeisolierenden Elements (1) zumindest teilweise mit der gebogenen Form und/oder den Erhebungen und/oder Vertiefungen des Strukturelements (33) in Eingriff steht/stehen, um im Wesentlichen zumindest einen Teil der Kontur davon anzunehmen,
- die zweite poröse Struktur (5, 50) eine gebogene Form und/oder Erhebungen und/oder Vertiefungen aufweist, und
- das wärmeisolierende Element (1) und die zweite poröse Struktur (50)
-- zusammen in einer zweiten Hülle (70) eingeschlossen sind, die nicht unter Vakuum steht,
-- und zwischen zwei Hauptflächen (S10, S20) einer Wand (70a) der zweiten Hülle (70), zweite Wand (70a) genannt, eingefügt sind, die an den beiden Hauptflächen thermogeformt ist, wobei die Schmalfläche einer Wand als derjenige Bereich zu verstehen ist, in welchem die die Sperrwand bildenden Lagen oder Lagenabschnitte miteinander verbunden sind und wo diese miteinander versiegelt sind, um komplementär die Hülle zu verschließen, wobei die Hauptfläche derselben Wand als derjenige Bereich der Hülle zu verstehen ist, welcher von diesem Versiegelungsbereich eingegrenzt ist.

2. Baugruppe nach Anspruch 1,
wobei die erste Hülle (7) innenliegend enthält:
- bereichsweise einen oder mehrere Bereiche (10d) zum Wärmeaustausch mit einem Kälte- oder Wärmeträgerfluid (19),
- und/oder einen oder mehrere Bereiche (10a1,10a2) mit geringerer Dicke (e1), die von dem oder den Bereichen (7b) beabstandet liegen, in denen die erste Hülle (7) luftdicht verschlossen ist,
- und/oder eine bereichsweise Füllung aus einem Phasenwechselmaterial (PCM; 13),
- und/oder eine bereichsweise Füllung aus einem Wärmeisolator (11), wo sich der oder die Vorzugsbereiche für den Wärmeaustausch befindet/befinden,
- und/oder eine Überdichte an porösem Material (3) im Vergleich zu anderen Bereichen aus porösem Material, wo sich der oder die Befestigungsbereiche befindet/befinden und/oder wo sich der oder die Vorzugsbereiche (10d) befindet/befinden und/oder wo sich der oder die Bereiche mit geringerer Dicke (e1) befindet/befinden.

3. Baugruppe nach einem der vorangehenden Ansprüche,
wobei das oder jedes wärmeisolierende Element (1) eine maximale Dicke von weniger als oder gleich 20 mm aufweist und wobei
- die erste poröse Struktur (5) frei von chemischem Bindemittel (9) ist und eine Dichte zwischen 10 kg/m³ und 300 kg/m³ aufweist, und
- die thermogeformte erste Sperrwand (7a) eine Bruchfestigkeit hat und auf allen Seiten der ersten porösen Struktur eine unebene Form aufweist, die die Form der ersten porösen Struktur (5) vorgibt, so dass die erste Hülle (7) die Form der ersten porösen Struktur (5) beibehält.

4. Baugruppe nach Anspruch 1 oder 2,
wobei die erste poröse Struktur (5) ein chemisches Bindemittel (9) enthält.

5. Baugruppe nach einem der vorangehenden Ansprüche, wobei
- die erste poröse Struktur (5) zwischen zwei Hauptflächen (S1, S2) der ersten Sperrwand (7a) eingefügt ist, und
- die erste Sperrwand (7a) an den beiden Hauptflächen (S1, S2) thermogeformt ist, und
- zwischen den beiden Hauptflächen (S1, S2) der ersten Sperrwand (7a) die erste poröse Struktur (5) erste Bereiche (10b2) mit einer ersten Dicke (e2) und zweite Bereiche (10a1) mit einer zweiten Dicke (e1), die geringer ist als die erste Dicke (e2), aufweist, wobei die zweiten Bereiche eine Dichte an porösem Material (3) aufweisen, die höher ist als die Dichte an porösem Material (3) in den ersten Bereichen.

6. Baugruppe nach einem der vorangehenden Ansprüche, wobei
- das Strukturelement (33) ein Türblatt aus Metall, Verbundwerkstoff oder Kunststoff ist, das einen Strukturrahmen einer Autotür definiert, und
- die Baugruppe ferner enthält:
-- auf einer Außenseite des Strukturelements (33) ein Türblech (41), das eine Außenverkleidung der Tür definiert und an dem Strukturelement (33) befestigt ist, und
-- auf einer Innenseite des Strukturelements (33) eine Innenverkleidung (43), die an dem Strukturelement (33) befestigt ist, so dass das innenliegende Auskleidungselement (39), welches das wärmeisolierende Element (1) enthält, zwischen dem Türblech (41) und der Innenverkleidung (43) angeordnet ist.

7. Baugruppe nach einem der Ansprüche 1 bis 5, wobei
- das Strukturelement (33) ein Karosserieteil (44) eines Fahrzeugs oder ein Abschirmungspaneel (33a) ist, und
- das innenliegende Auskleidungselement (390) zwischen der Außenumgebung (35) und einer Kühlplatte (41) eines im Innenraum (37) angeordneten Batteriepakets zur elektrischen Versorgung des Fahrzeugs eingefügt ist, wobei das Fahrzeug vom Typ Hybrid oder vollelektrisch ist, wobei das zumindest eine wärmeisolierende Element (1) zwischen dem Paneel (33a) zur Abschirmung (33) und der Kühlplatte (41), die in Wärmeaustausch mit dem Batteriepaket angeordnete Kühlmittelumlaufkanäle umfasst, sandwichartig angeordnet ist.

8. Baugruppe nach Anspruch 7, wobei
- die Kühlplatte (41) Erhebungen und Vertiefungen aufweist, von denen zumindest einige durch die Kühlmittelumlaufkanäle definiert sind,
- das Strukturelement (33) die Erhebungen und Vertiefungen aufweist,
- das zumindest eine wärmeisolierende Element (1) die Erhebungen und Vertiefungen auf beiden Hauptflächen der ersten Sperrwand (7a) aufweist, und
- auf den beiden Hauptflächen der ersten Sperrwand (7a)
-- die jeweiligen Erhebungen des zumindest einen wärmeisolierenden Elements (1) mit den jeweiligen Vertiefungen der Kühlplatte (41) und des Strukturelements (33) in Eingriff stehen,
-- die jeweiligen Vertiefungen des zumindest einen wärmeisolierenden Elements (1) mit den jeweiligen Erhebungen der Kühlplatte (41) und des Strukturelements (33) in Eingriff stehen.

9. Baugruppe nach einem der Ansprüche 1 bis 5, wobei
- das Strukturelement (63, 77) ein Karosserieteil (60, 75) eines Kraftfahrzeugs umfasst, das eine Fahrgastzelle (61) des Fahrzeugs umgibt, und
- die Baugruppe ferner von dem Strukturelement (63, 77) zu dem zumindest einen wärmeisolierenden Element (1) hin eine Luftschicht (65) und dann einen weiteres Strukturelementteil (33) umfasst.

10. Baugruppe nach einem der Ansprüche 1 bis 5, wobei
- das Strukturelement (63, 77) ein Luftfahrzeug-Rumpfteil (75) umfasst, das einen Passagierraum (61) umgibt, und
- die Baugruppe ferner zwischen dem Strukturelement (63, 77) und dem zumindest einen wärmeisolierenden Element (1) eine Luftschicht (79) mit einer Dicke zumindest gleich 20 mm umfasst.

11. Baugruppe nach einem der Ansprüche 1 bis 5, wobei das Strukturelement enthält:
- Außenplatten (63, 77), die zu einem Luftfahrzeug-Rumpfteil (75) gehören und innen aneinander befestigt sind,
- Rahmen (89) und/oder Holme (91) und/oder Längsträger (93), die jeweils einzeln von zumindest einem wärmeisolierenden Element (1) und der zweiten porösen Struktur (50) umgeben sind.

## Claims

1. An assembly comprising :
-- a structural element (33) interposed between an outside environment (35) and an internal volume (37) to be protected, ,
-- and an inner lining member (39,390,391,392) for lining the structural element (33), the inner lining member comprising at least one vacuum, thermal insulating element (1) comprising:
--- a compressed porous structure (5) defining a first porous structure comprising a porous material (5a) having a first density,
--- a first envelope (7) closed in an airtight manner :
---- comprising a first barrier wall (7a) which is thermoformable and airtight,
---- in which first envelope is enclosed the first porous structure (5) whose shape is followed by the first barrier wall (7a), and
---- in which first envelope, at outside ambient temperature and outside ambient pressure, a pressure ranging from less than 10⁵Pa to more than 10⁻²Pa prevails, the inner lining member (39,390,391,392) further comprising a second porous structure (50) comprising the same porous material (5a), or a different porous material (5b), having a second density, the second density being lower than the first density, the first and second porous structures (5,50) being superimposed,
**characterized in that**, to protect thermally and acoustically the internal volume (37), said assembly is such that:
the porous material of the first porous structure (5) has a first density between more than 100kg/m³ to 800kg/m³; and the porous material of the second porous structure (50) has a second density between 5kg/m³ to less than 100kg/m³,
- the second porous structure (50) presents a thickness (e20) greater than the thickness (e10) of the first porous structure,
- the structural element (33) and said at least thermal insulating element (1) are three-dimensional is bent-shaped and/or has reliefs and/or depressions,
- the first porous structure (5), which is three-dimensional, is bent-shaped and/or has reliefs and/or depressions,
- the bent-shaped and/or has reliefs and/or depressions of said at least thermal insulating element (1) is at least partly engaged with the bent-shaped and/or has reliefs and/or depressions of the structural element (33), such as to sensibly follows its contours,
- the second porous structure (5) is bent-shaped and/or has reliefs and/or depressions, and
- the thermal insulating element (1) and the second porous structure (50):
-- are enclosed together in a second envelope (70) which is not under vacuum,
-- and are interposed between two major surfaces (S10, S20) of a wall (70a) of said second envelope (70), which is thermoformed at the location of said two major surfaces, a minor surface of a barrier wall is the area where the sheets, or portions of sheets, forming the barrier wall are interconnected and sealed together to close the envelope, and in a complementary way, the major surface of the same barrier wall is the area of the envelope delimited by this sealing zone.

2. Assembly according to claim 1, wherein the first envelope (7) comprises internally:
- locally, one or more zones (10d) for heat exchange with a refrigerant or a heat-transfer fluid (19),
- and/or zone(s) (10a1, 10a2) of lesser thickness (e1) located away from zone(s) (7b) where the envelope (7) is airtightly sealed,
- and/or a local charge of a phase change material (PCM; 13),
- and/or a local loading of a thermal insulation (11) where said heat exchange zone(s) is located,
- and/or an overdensity of porous material (3) in relation to other areas of the porous material, where attachment area(s) is located and/or where the preferred area(s) (10d) is located, and/or where the area(s) of lesser thickness (e1) is located.

3. An assembly according to any one of the preceding claims, in which the or each thermal insulating element (1) has a maximum thickness less than or equal to 20mm, and in which :
- the first porous structure (5) is free of chemical binder (9) and has a density of between 10 kg/m3 and 300 kg/m3, and
- the thermoformed first barrier wall (7a) has a breaking strength and, on all faces of the first porous structure, a non-planar shape which imposes the shape of the first porous structure (5), so that the first envelope (7) maintains the shape of the first porous structure (5).

4. An assembly according to any one of claims 1 to 3 or 2, wherein the first porous structure (5) comprises a chemical binder (9).

5. An assembly according to any one of the preceding claims, wherein :
- the first porous structure (5) is interposed between two major surfaces (S1,S2) of said first barrier wall (7a), and
- the first barrier wall (7a) is thermoformed at the location of said two major surfaces (S1,S2), and
- between said two major surfaces (S1, S2) of the first barrier wall (7a), the first porous structure (5) has first zones (10b2) having a first thickness (e2) and second zones (10b1) having a second thickness (e1) less than the first thickness (e2), the second zones having a density of porous material (3) greater than the density of porous material (3) of the first zones.

6. An assembly according to any one of the preceding claims, wherein :
- the structural element is a door panel, made of metal, composite or plastic, which defines a structural frame for an automobile door,
- said assembly further comprising:
-- - at an outer side of the structural element(33), a door panel metal sheet (41) defining an outer body of the door and which is attached to the structural element (33), and,
- at an inner side of the structural element (33), an interior trim (43) fixed to the structural element (33) so that the inner lining member (39) including said thermal insulating element (1) is interposed between the door panel metal sheet (41) and the interior trim (43).

7. An assembly according to any one of claims 1 to 5, wherein :
- the structural element (33) is a part of the vehicle body (44) or a protective tray (33a),
- the inner lining member (390) being interposed between the outside environment (35) and a cooling plate (41) of a battery pack for an electric supply of the vehicle, to be disposed into the internal volume (37), said vehicle being an hybrid vehicle or all-electric vehicle,
said at least thermal insulating element (1) being sandwiched between the protective plate (33a), or the vehicle body (44), and the cooling plate (41), which comprises channels for circulating a cooling fluid disposed in heat exchange with the battery pack.

8. An assembly according to claim 8, wherein :
- the cooling plate (41) has reliefs and depressions, at least some of which are defined by the cooling fluid channels,
- the structural element (33) has said reliefs and depressions,
- said at least one thermal insulating element (1) has said projections and depressions on both major surfaces of said first barrier wall (7a), and,
- on said major surfaces of said first barrier wall (7a):
-- said respective reliefs of said at least one thermal insulating element (1) are engaged with respective depressions of the cooling plate (41) and the structural element (33),
-- said respective recesses of said at least one thermal insulating element (1) are engaged with the respective reliefs of the cooling plate (41) and the structural element (33).

9. An assembly according to any one of claims 1 to 5, wherein :
- the structural element comprises a part of a motor vehicle body surrounding a passenger compartment (61) of the motor vehicle,
- said assembly further comprising from the structural element (63,77) to said at least one thermal insulating element (1), a layer of air (65) and then another part of the structural element (33).

10. An assembly according to any one of claims 1 to 5, wherein :
- the structural element (63,77) comprises a part of an aircraft fuselage (75) surrounding a passenger compartment (61),
- said assembly comprising between the structural element (63,77) and said at least one thermal insulating element (1), a layer of air (79) at least 20mm thick.

11. An assembly according to any one of claims 1 to 5, wherein the structural element comprises:
- external panels (63,77) belonging to an aircraft fuselage (75),
- frames (89) and/or healds (91) and/or stringers (93), which are individually surrounded by at least one said thermal insulating element (1) and by a second porous structure (50),
